# EUROPEAN PATENT APPLICATION

(11) **EP 3 103 536 A1**
(43) Date of publication of application: **14.12.2016**
(21) Application number: 15188919.3
(22) Date of filing: 08.10.2015
(51) Int. Cl.: A63F 13/35, A63F 13/85, A63F 13/87, A63F 13/92, G06Q 30/02

(54) **METHOD AND SYSTEM FOR EVALUATING GAME CONTENT**

(30) Priority: 10.06.2015 KR 20150082155
(71) Applicant: Next Floor Corp., Seoul (KR)
(72) Inventor: Min Kyu, Kim, Gyeonggi-do (KR)
(74) Representative: Kretschmann, Dennis

(57) **Abstract**

The present invention relates to a method for evaluating game content in an online game, and the method comprises: receiving evaluation information for game content from a first game device; updating evaluation data for the game content in a game content evaluation database based on the received evaluation information for the game content; receiving a evaluation data request from a second game device; reading the evaluation data for the game content from the game content evaluation database; and transmitting the read evaluation data for the game content to the second game device.

## Description

### CROSS-REFERENCE TO RELATED APPLICATION(S)

This application is based on and claims priority from Korean Patent Application No. 10-2015-0082155, filed on with Korean Intellectual Property Office, the disclosure of which incorporated herein in its entirety by reference.

### BACKGROUND

### 1. Technical Field

The present invention relates to an online game.

### 2. Description of the Related Art

The advance of smartphone technology recently brought explosion of online game user(gamer) population. In general, descriptions about game contents provided in the game itself tend to be simple and limited, which makes the users spend long time playing and repeating trial and error to figure out specific information or knowhow about the game contents, for example, characters, pets, and items. Moreover, it is difficult to share the information and knowhow acquired as such with other users. Accordingly, it is desired to have a system which enables the users to easily share the information about game contents with each other inside the game program while playing the game.

### SUMMARY

A method performed by a game server for evaluating game content according to an embodiment of the present disclosure includes: receiving evaluation information for the game content from a first game device; updating evaluation data for the game content in a game content evaluation database based on the received evaluation information for the game content; receiving an evaluation data request for the game content from a second game device; reading the evaluation data for the game content from the game content evaluation database; and transmitting the read evaluation data for the game content to the second game device.

### BRIEF DESCRIPTION OF THE DRAWINGS

FIG. 1 is a schematic view showing a game content evaluating system according to an embodiment of the present invention.
FIG. 2 is a sequence diagram showing a schematic flow of a game content evaluating method according to an embodiment of the present invention.
FIG. 3 is an exemplary screen on which user-input comments on a particular game content are displayed accumulatively in a game content evaluating system according to an embodiment of the present invention.
FIG. 4 is a diagram showing the input flow of a comment on game content according to an embodiment of the present invention.
FIG. 5 is a diagram showing the input flow of a star rating of game content according to an embodiment of the present invention.
FIG. 6 is a diagram showing the input flow of "recommend / not recommend" on a comment on game content according to an embodiment of the present invention.
FIG. 7 is a diagram showing the input flow of a display criterion for evaluation data for game content according to an embodiment of the present invention.
FIG. 8 is a sequence diagram showing a more specific update flow of evaluation data for game content according to an embodiment of the present invention.
FIG. 9 is a sequence diagram showing a more specific display flow of evaluation data for game content according to an embodiment of the present invention.

### DETAILED DESCRIPTION

In the following detailed description, reference is made to the accompanying drawing, which form a part hereof. The illustrative embodiments described in the detailed description, drawing, and claims are not meant to be limiting. Other embodiments may be utilized, and other changes may be made, without departing from the spirit or scope of the subject matter presented herein.

The present invention is to solve the described problems above, which provides a system and method for evaluating the game content.

A method performed by a game server for evaluating game content according to an embodiment of the present disclosure includes: receiving evaluation information for game content from a first game device; updating evaluation data for the game content in a game content evaluation database based on the received evaluation information for the game content; receiving an evaluation data request for the game content from a second game device; reading the evaluation data for the game content from the game content evaluation database; and transmitting the read evaluation data for the game content to the second game device.

The game content may include at least one of a game character, a pet, and an item.

The evaluation information for the game content and the evaluation data for the game content may include a comment on the game content.

The evaluation information for the game content may include a score of the game content.

The evaluation data for the game content may include an overall rating of the game content, and the overall rating of the game content may be calculated based on scores of the game contents received from a plurality of game devices.

The evaluation data for the game content may include evaluation data for a field of the evaluation data for the game content, and wherein the method may further include: receiving evaluation information for the field of the evaluation data for the game content from the second game device; and updating the evaluation data for the field of the evaluation datae for the game content in the game content evaluation database based on the received evaluation information for the field of the evaluation data for the game content.

The evaluation information for the field of the evaluation data for the game content may include whether or not the field of the evaluation data for the game content is recommended.

The evaluation data for the field of the evaluation data for the game content may include a number of recommendations on the field of the evaluation data for the game content.

A method performed by a game device for evaluating game content according to an embodiment of the present disclosure includes: receiving evaluation information for game content from a user; transmitting the evaluation information for the game content to a game server; receiving a request for displaying the evaluation data for the game content from the user; transmitting a request for the evaluation data for the game content to the game server; receiving the evaluation data for the game content from the game server; and displaying the received evaluation data for the game content.

The evaluation information for the game content transmitted from another game device may also be reflected in the evaluation data for the content.

The game content may include at least one of a game character, a pet, and an item.

The evaluation information for the game content and the evaluation data for the game content may include a comment on the game content.

The evaluation information for the game content may include a score of the game content.

The evaluation data for the game content may include an overall rating of the game content.

The evaluation data for the game content may include evaluation data for a field of the evaluation data for the game content, and the method may further include: receiving evaluation information for the field of the evaluation data for the game content from a user; and transmitting the received evaluation information for the field of the evaluation data for the game content to the game server.

The evaluation information for the field of the evaluation data for the game content may include whether or not the field of the evaluation data for the game content is recommended.

The evaluation data for the field of the evaluation data for the game content may include a number of recommendations on the field of the evaluation data for the game content.

The method may further include: receiving a game content evaluation data display criterion from the user; and displaying the received evaluation data for the game content according to the received game content evaluation data display criterion. The game content evaluation data display criterion may include at least one of: newest to oldest, recommended-accumulated, recommended-recent, and my comments.

The displaying of the received evaluation data for the game content may include displaying the evaluation data only for the game content among a plurality of game contents.

The receiving of the evaluation information for the game content from the user may be performed by receiving an evaluation information input command from the user while a game contents list page, a detailed information page of the game content, or an evaluation data display page for the game content is displayed.

A game server according to an embodiment of the present disclosure may have: a communication unit to communicate with a game device; and a control unit configured to: receive evaluation information for game content from a first game device through the communication unit; update evaluation data for the game content in a game content evaluation database based on the received evaluation information for the game content; receive an evaluation data request for the game content from a second game device through the communication unit; read the evaluation data for the game content from the game content evaluation database; and transmit the read evaluation data for the game content to the second game device through the communication unit.

The game content may include at least one of a game character, a pet, and an item.

The evaluation information for the game content and the evaluation data for the game content may include a comment on the game content.

The evaluation information for the game content may include a score of the game content.

The evaluation data for the game content may include an overall rating of the game content, and the overall rating of the game content may be calculated based on scores of the game content received from a plurality of game devices.

The evaluation data for the game content may include evaluation data for a field of the evaluation data for the game content, and wherein the control unit may be further configured to receive evaluation information for the field of the evaluation data for the game content from the second game device through the communication unit and update the evaluation data for the field of the evaluation data for the game content in the game content evaluation database based on the received evaluation information for the field of the evaluation data for the game content.

The evaluation information for the field of the evaluation data for the game content may include whether or not the field of the evaluation data for the game content is recommended.

The evaluation data for the field of the evaluation data for the game content may include a number of recommendations on the field of the evaluation data for the game content

A game device according to an embodiment of the present disclosure may have: a communication unit to communicate with a game server; an input unit to receive an user input; a display unit to display data; and a control unit configured to: receive evaluation information for game content from a user through the input unit; transmit the evaluation information for the game content to the game server through the communication unit; receive a request for displaying the evaluation data for the game content from the user through the input unit; transmit a request for the evaluation data for the game content to the game server through the communication unit; receive the evaluation data for the game content from the game server through the communication unit; and display the received evaluation data for the game content through the display unit.

The evaluation information for the game content transmitted from another game device may also be reflected in the evaluation data for the game content.

The present disclosure includes a computer program stored on a medium to execute a method according to an embodiment of the present invention.

The present disclosure includes a non-transitory computer-readable storage medium having a program to perform a method according to an embodiment of the present invention stored thereon.

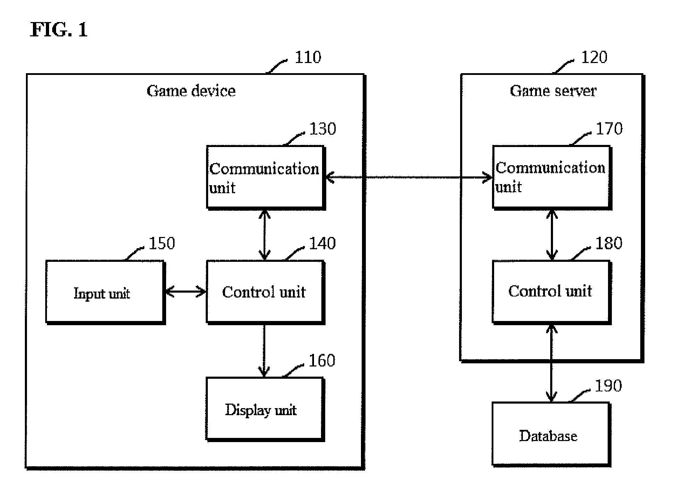

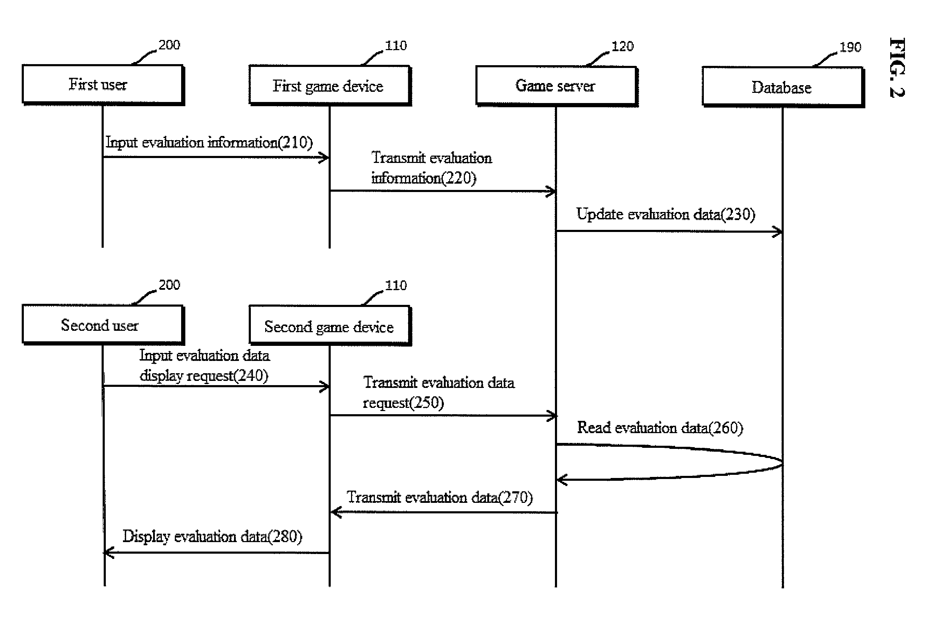

FIG. 1 is a schematic view showing a game content evaluating system according to an embodiment of the present invention. Referring to FIG. 1, the game content evaluating system according to an embodiment of the present invention includes a game device 110 and a game server 120 communicating with each other. Game device 110 is a device on which an online game client program is running, which includes a communication unit 130, a control unit 140, an input unit 150, and a display unit 160. Game server 110 is a device on which an online game server program is running, which includes a communication unit 170, and a control unit 180. The game device and the game server communicate with each other via respective communication units 130 and 170. Control unit 140 of the game device receives an input from a user (gamer) through input unit 150 and displays information to the user through display unit 160. Depending on the embodiment, a single unit in which the input and display units are combined, such as a touchscreen, can be used. The game server manages data using a game content evaluation database 190, and the game content evaluation database may be incorporated into the game server depending on the embodiment. The respective control units 140 and 180 work together with the communication unit, input unit, display unit, and database, and so on, which will be described below with reference to FIG. 2.

FIG. 2 is a sequence diagram showing a schematic flow of a game content evaluating method according to an embodiment of the present invention. Referring to FIG. 2, the game content evaluating method according to an embodiment of the present invention includes a process 210-230 for storing or updating evaluation data for game content in a game content evaluation database 190 with evaluation information for the game content which is input by a user 200 in the online game and a process 240-280 for displaying the evaluation data for the game content stored in game content evaluation database 190 to a user in the online game. Here, the game content means various game elements such as game characters, pets, items, and so on. The evaluation information for the game content is information in which a user evaluates a particular game content, which includes: an opinion, in which a user thinks or feels about the game content; an explanation for the content; a comment, which is a text description about knowhow and the like for the content obtained through game play; or score, in which performance, usability, and so on of the content are expressed as number or star rating.

With regard to the evaluation data update process, control unit 140 of the first game device receives evaluation information for the game content, from a user 200 through input unit 150 (step 210) and transmits the evaluation information for the game content to the game server through communication unit 130 (220). Control unit 180 of the game server updates the evaluation data for the game content in game content evaluation database 190 based on the evaluation information for the game content received from the first game device through communication unit 170 (step 230).

If the evaluation information input by the user is a comment on the game content, the comment may be stored in the evaluation data for the game content in the database, or an existing comment may be deleted and replaced by the new comment. If the evaluation information input by the user is a score of the game content, the score may be stored or updated in the evaluation data for the game content in the database. Also, an overall rating may be calculated based on the scores of the game content received from a plurality of game devices, and stored or updated in the evaluation data for the game content in the database. The overall rating may be calculated by averaging all scores or by alternative algorithms.

With regard to the evaluation data display process, control unit 140 of the second game device receives a request for displaying the evaluation data for the game content from a user through input unit 150 (step 240) and transmits a request for evaluation data for the game content to the game server through communication unit 130 (step 250). Control unit 180 of the game server received the request for the evaluation data for the game content from the second game device through communication unit 170 reads the evaluation data for the game content from the game content evaluation database (step 260) and transmits the read evaluation data for the game content to the second game device through communication unit 170 (step 270). Control unit 140 of the second game device which received the evaluation data for the game content from the game server through communication unit 150 displays the received evaluation data for the game content in the online game through the display unit 160 (step 280). In general, there is a wide variety of contents in the game, and control unit 140 of the second game device may only display the evaluation data for a specific one of the contents for which the user requested to display the evaluation data, so that the user can easily identify the information specific to the desired content.

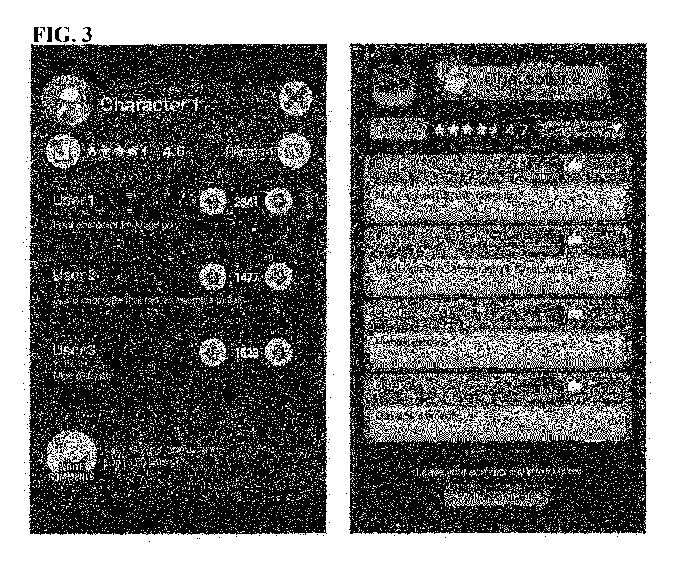

In this way, the evaluation information for the game content transmitted from the first game device is reflected in the evaluation data in the database, and the second game device receives and displays the evaluation data for the game content, so that the evaluation information for the specific game content can be shared among different users. Since the evaluation data in the database may reflect evaluation information received from a number of game devices such as a third and a fourth game devices, and so on, the evaluation information from a large number of users can be accumulated and shared with each other. For example, as shown in FIG. 3, if the user-input comments on a particular game content are displayed accumulatively, a discussion or questions and answers may be conducted between the users with respect to the game content. These information sharing, discussions, questions and answers, and so on between users are especially helpful for novice users who are unfamiliar with the various game elements, and may have the nature of user community to form solidarity between the users. In particular, since the users playing the game by themselves continuously add and modify the evaluation data in real-time, it is possible to flexibly cope with changes in the contents or system of the game, which is a great advantage of the present invention.

FIG. 2 shows an embodiment in which the evaluation data reflecting the evaluation information input from the first game device is received and displayed by the second game device, but it sure is possible to receive and display the evaluation data reflecting the evaluation information input from the first game device by the same first game device. Further, the user may be identified by the game device, or by a login method using a user ID of the game operater, Kakao account, Facebook UID, and so on.

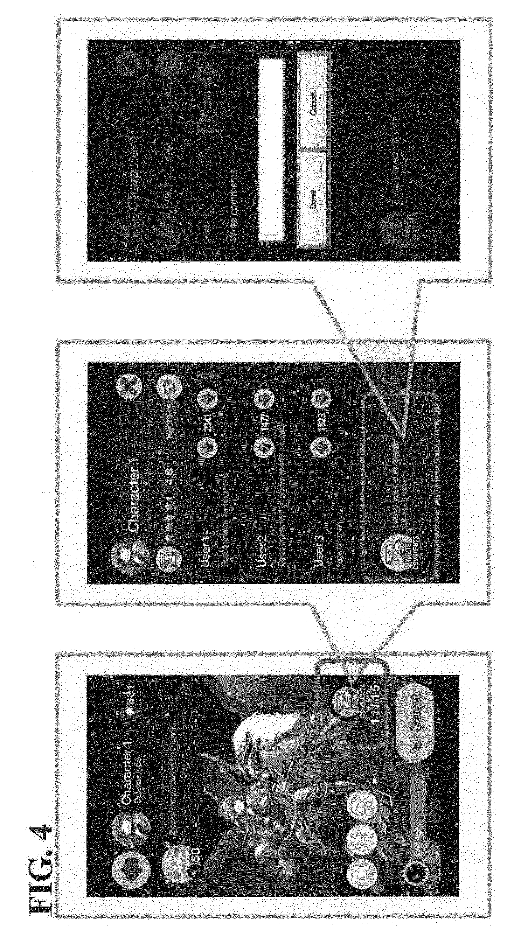

FIG. 4 is a diagram showing the input flow of a comment on game content according to an embodiment of the present invention. Referring to FIG. 4, from the detailed information page of each game content, a user can enter into the comment view page, i.e., the evaluation data display page for the game content, and input a comment. So, according to the present invention, it is very simple to write and read comments inside the game, which keeps the participation rate of users very high. Depending on the embodiment, a comment can be directly input in the detailed information page of each game content, or in the game contents list page.

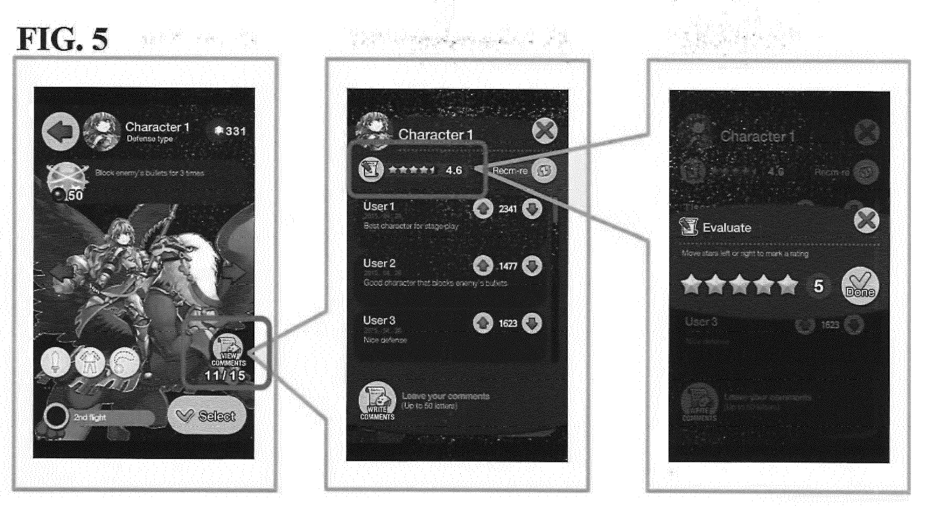

Also, as shown in FIG. 5, an overall rating of the game content may be calculated on the basis of the star ratings which users marked on a specific game content and shared between the game users. This will be the factor that a user can determine the performance of the game content most intuitively, and it is particularly helpful for novice users who are not familiar with a variety of game contents.

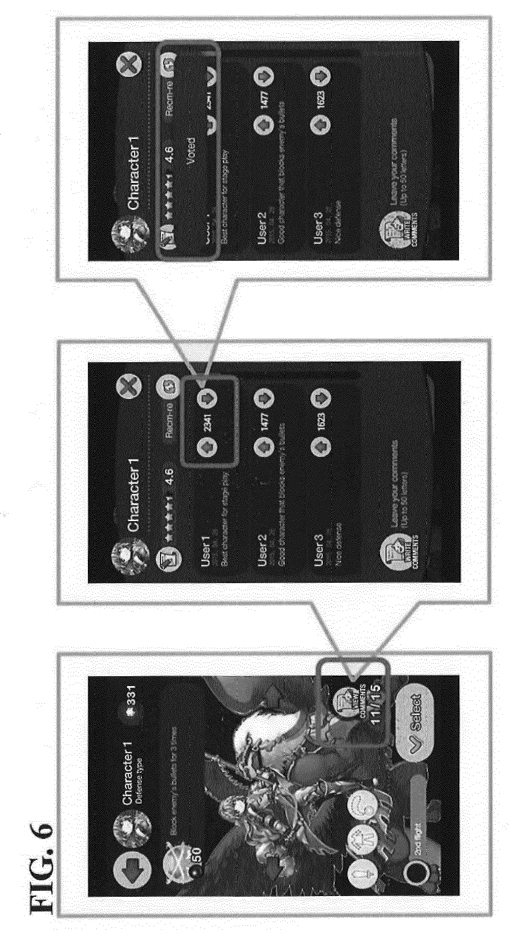

Further, as shown in FIG. 6, a user can evaluate the evaluation for the game content itself as well as the game content by inputting "recommend/not recommend" or "like/dislike" for the evaluation data displayed by the display unit 160. That is, the evaluation data for the game content stored in the database 190 may include evaluation data for a specific field of the evaluation data itself. Control unit 140 of the game device receives evaluation information for a field of the evaluation data for the game content, and transmits the received evaluation information for the field of the evaluation data for the game content to the server through communication unit 130. Control unit 180 of the game server receives the evaluation information for the field of the evaluation data for the game content from the game device through commnucation unit 170, and updates the evaluation data for the field of the evaluation data for the game content in the game content evaluation database based on the received evaluation information for the field of the evaluation data for the game content. Here, the evaluation information for the field of the evaluation data for the game content input from the user may include "recommend" or "not recommend" for the field of the evaluation data for the game content. The evaluation data for the field of the evaluation data for the game content which is stored/updated in the database may include the number of "recommend", the number of "not recommend", or the difference between the numbers of "recommend" and "not recommend", and so on with regard to the field of the evaluation data for the game content.

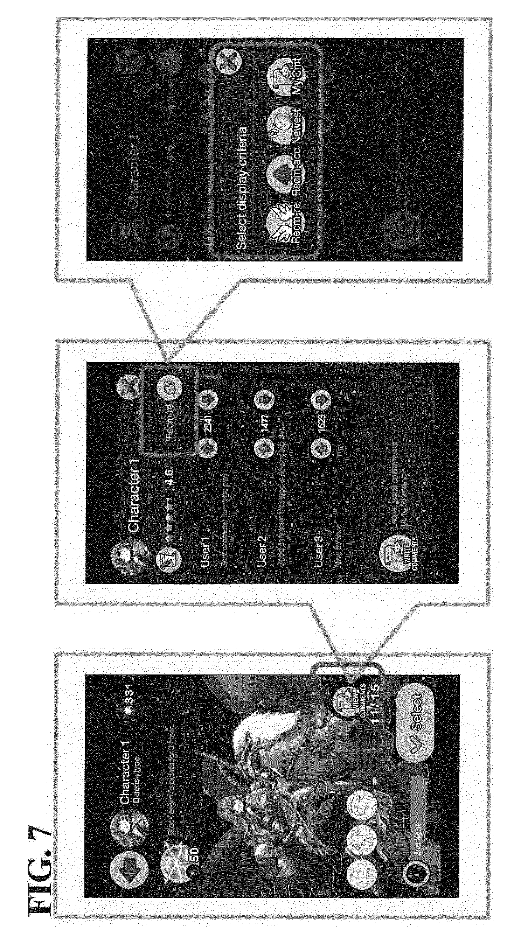

In addition, as shown in FIG. 7, a user may select a display criterion for the evaluation data for the game content. That is, control unit 140 of the game device receives a game content evaluation data display criterion from a user through input unit 150, and displays the evaluation data for the game content through display unit 160 according to the input game content evaluation data display criteron. Here, the game content evaluation data display criteria may include "newest to oldest", "recommended-accumulated", "recommended-recent", or "my comments", and so on. Among these criteria, "newest to oldest", "recommended-accumulated", and "recommended-recent" are to decide the display order of the evaluation data, and "my comments" is to display the user's own comments only. In particular, as "recommended-accumulated" and "recommended-recent" criteria work together with the evaluation data recommendation feature which is described with reference to FIG. 6, users can filter bad or false opinions by themselves and easily look up good or important opinions.

Furthermore, the game administrators may also read the comments stored in the database. Accordingly, users may enter suggestions or complaints about a specific game content, and the game administrators may identify and consider suggestions or complaints of consensus among users in accordance with the recommendation feature for the comment to help improve the services.

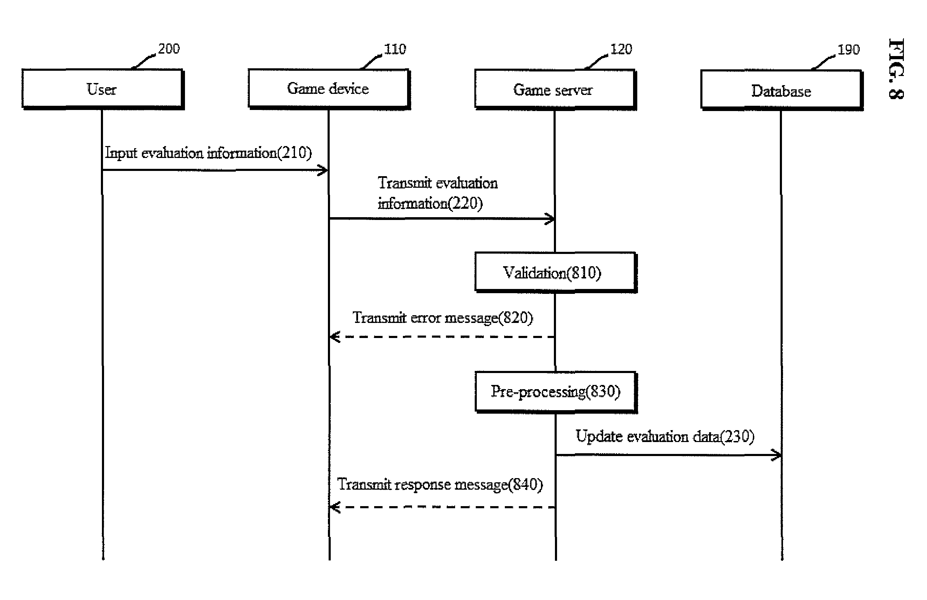

FIG. 8 is a sequence diagram showing a more specific update flow of the evaluation data for the game content according to an embodiment of the present invention. As compared to FIG.2, FIG. 8 further includes validation 810, error message transmission 820, preprocessing 830, and response message transmission 840. Validation 810 is to determine whether the ID of the user and the game content are correct. Additionally, various settings for evaluation information input such as language code or nickname can be checked during validation 810. If an error occurs during the validation, the game server may transmit an error message to the game device (step 820). Pre-processing 830 is to perform necessary processing before updating the evaluation data in the database, which may include determining whether the user has ever input evaluation information for the content before and whether the existing evaluation information should be replaced with the new evaluation information or the new evaluation information would be stored additionally, and processing in accordance with the determination. The game server may send a response message to the game device after updating the evaluation data in the database (step 840).

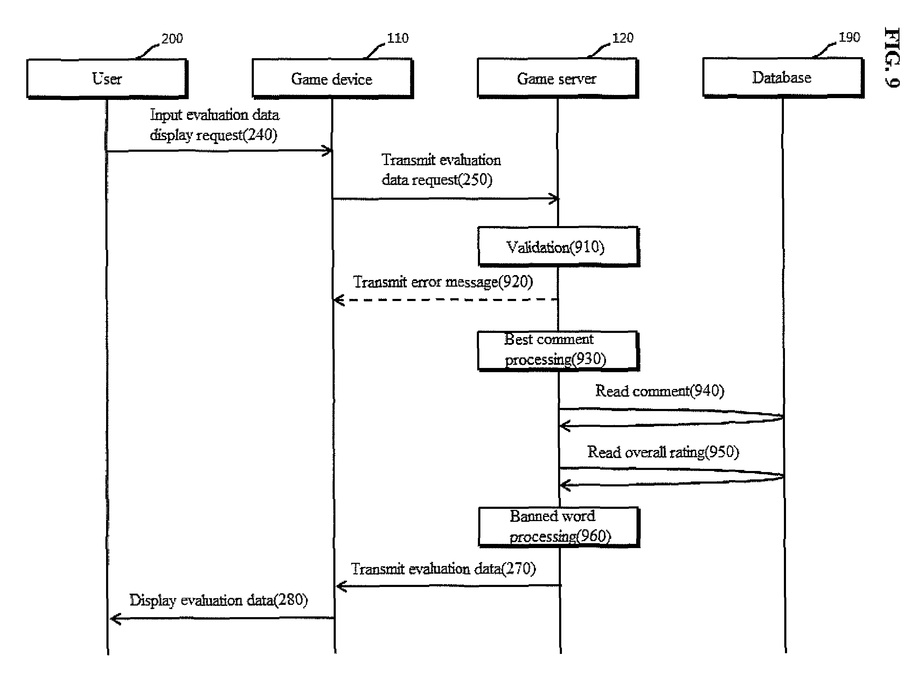

FIG. 9 is a sequence diagram showing a more specific display flow of the evaluation data for the game content according to an embodiment of the present invention. As compared to FIG.2, FIG. 9 further includes validation 910, error message transmission 920, best comment processing 930, and banned word processing 960. Also, evaluation data reading 260 of FIG.2 is performed more specifically as comment reading 940 and overall rating reading 950. Validation 910 is similar to validation 810 which is to determine whether the ID of the user and the game content are correct. If an error occurs during the validation, the game server may transmit an error message to the game device (step 920). Best comment processing 930 is to perform processes for lining up and reading the comments according to the evaluation data display criterion such as "newest to oldest", "recommended-recent", and so on. Comment reading 940 is to read the comments by pages from the database according to the order in which the comments are lined up. Overall rating reading 950 is to read an overall rating on the content from the database. Banned word processing 960 is to filter the banned words such as abuse languages in the comments.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

## Claims

1. A method performed by a game server for evaluating game content, comprising.
receiving evaluation information for the game content from a first game device;
updating evaluation data for the game content in a game content evaluation database based on the received evaluation information for the game content;
receiving an evaluation data request for the game content from a second game device;
reading the evaluation data for the game content from the game content evaluation database; and
transmitting the read evaluation data for the game content to the second game device.

2. The method of claim 1, wherein the evaluation information for the game content and the evaluation data for the game content comprise a comment on the game content.

3. The method of claim 1 or 2, wherein the evaluation information for the game content comprises a score of the game content.

4. The method of any of the preceding claims, wherein the evaluation data for the game content comprises an overall rating of the game content; and
the overall rating of the game content is calculated based on scores of the game contents received from a plurality of game devices.

5. The method of any of the preceding claims, wherein the evaluation data for the game content comprises evaluation data for a field of the evaluation data for the game content; and
wherein the method further comprises:
receiving evaluation information for the field of the evaluation data for the game content from the second game device; and
updating the evaluation data for the field of the evaluation data for the game content in the game content evaluation database based on the received evaluation information for the field of the evaluation data for the game content.

6. A method performed by a game device for evaluating game content, comprising:
receiving evaluation information for the game content from a user;
transmitting the evaluation information for the game content to a game server;
receiving a request for displaying the evaluation data for the game content from the user;
transmitting a request for the evaluation data for the game content to the game server;
receiving the evaluation data for the game content from the game server; and
displaying the received evaluation data for the game content.

7. The method of claim 6, wherein evaluation information for the game content transmitted from another game device is reflected in the evaluation data for the content.

8. The method of claim 6 or 7, wherein the evaluation data for the game content comprises evaluation data for a field of the evaluation data for the game content; and the method further comprises:
receiving evaluation information for the field of the evaluation data for the game content from a user; and
transmitting the received evaluation information for the field of the evaluation data for the game content to the game server.

9. The method of any of the claims 6 to 8, wherein the displaying of the received evaluation data for the game content comprises displaying the evaluation data only for the game content among a plurality of game contents.

10. A game server comprising:
a communication unit to communicate with a game device; and
a control unit configured to:
receive evaluation information for game content from a first game device through the communication unit;
update evaluation data for the game content in a game content evaluation database based on the received evaluation information for the game content;
receive an evaluation data request for the game content from a second game device through the communication unit;
read the evaluation data for the game content from the game content evaluation database; and
transmit the read evaluation data for the game content to the second game device through the communication unit.

11. The game server of claim 10, wherein the evaluation data for the game content comprises evaluation data for a field of the evaluation data for the game content; and
wherein the control unit is further configured to:
receive evaluation information for the field of the evaluation data for the game content from the second game device through the communication unit; and
update the evaluation data for the field of the evaluation data for the game content in the game content evaluation database based on the received evaluation information for the field of the evaluation data for the game content.

12. A game device comprising:
a communication unit to communicate with a game server;
an input unit to receive an user input;
a display unit to display data; and
a control unit configured to:
receive evaluation information for game content from a user through the input unit;
transmit the evaluation information for the game content to the game server through the communication unit;
receive a request for displaying the evaluation data for the game content from the user through the input unit;
transmit a request for the evaluation data for the game content to the game server through the communication unit;
receive the evaluation data for the game content from the game server through the communication unit; and
display the received evaluation data for the game content through the display unit.

13. The game device of claim 12, wherein evaluation information for the game content transmitted from another game device is reflected in the evaluation data for the game content.

14. A computer program stored on a medium to execute the method of any one of claims 1 to 9 by a computer.

15. A non-transitory computer-readable storage medium having a program to perform the method of any one of claims 1 to 9 stored thereon.
